# EUROPÄISCHE PATENTSCHRIFT

(11) **EP 0 455 852 B1**
(45) Veröffentlichungstag und Bekanntmachung des Hinweises auf die Patenterteilung: **10.08.1994**
(21) Anmeldenummer: 90108740.3
(22) Anmeldetag: 09.05.1990
(51) Int. Cl.: A61C 1/00, A61G 15/02

(54) **Medizinische, insbesondere zahnmedizinische Einrichtung**
Medical and, in particular, dental device
Dispositif médical et en particulier dentaire

(43) Veröffentlichungstag der Anmeldung: 13.11.1991
(73) Patentinhaber: SIEMENS AKTIENGESELLSCHAFT, 80333 München (DE)
(72) Erfinder: Stöckl, Klaus, D-6140 Bensheim 3 (DE)

(56) Entgegenhaltungen:
- WO-A-89/05613
- DE-A- 2 724 051
- FR-A- 2 482 446
- FR-A- 2 596 639
- US-A- 4 383 167

## Beschreibung

Bei medizinischen Einrichtungen, wie Röntgen-, Dental- oder ophthalmologischen Einrichtungen besteht der Wunsch, die Positionen der verstellbaren Gerätschaften und/oder die Betriebswerte dieser Gerätschaften mit Hilfe elektrischer Stellorgane auf möglichst einfache Weise und rasch ansteuern zu können. Bisher mußte zum Ansteuern dieser 'Funktionen' eine Vielzahl von Hand- und Fußschaltern, die an unterschiedlichen Stellen der Einrichtung angeordnet waren, betätigt werden.

Bei zahnärztlichen Einrichtungen z.B. gilt es, im Verlauf der Behandlung eines Patienten sehr viele unterschiedliche Funktionen anzusteuern und die Lage und/oder die Betriebswerte der Gerätschaften, die die Einrichtung enthält, zu verändern. Unter Gerätschaften werden hier insbesondere verstanden der Patientenstuhl, das Arzt- und Helferingerät sowie alle, diesen zugeordneten Instrumente und Hilfseinrichtungen. Die bei diesen Gerätschaften anzusteuernden bzw. auszulösenden Funktionen lassen sich differenzieren in
1. Gerätefunktionen
2. Instrumentenfunktionen
3. Sonstige (Hilfs-)Funktionen
Gerätefunktionen können sein:
- Arzt- und/oder Helferingerät aus einer Ausgangsposition in eine Arbeitsposition und von dort wieder zurück in die Ausgangsposition zu fahren
- den Patientenstuhl insgesamt oder Teile davon (Rückenlehne, Sitz, Kopfstütze) von einer Ausgangsposition in ein oder mehrere Arbeitspositionen und von dort wieder zurück in die Ausgangsposition zu bringen.
- den Patientenstuhl oder Teile davon während einer Behandlung aus einer Arbeitsposition in eine andere Arbeitsposition (z.B. Speiposition) und von dort wieder zurück in die erste Arbeitsposition zu bringen.

Die Ansteuerung dieser Gerätefunktionen erfolgt beim Stand der Technik in der Regel durch Betätigung entsprechender Schaltelemente, mit denen zugeordnete elektrische und/oder hydraulische Stellmotoren betätigt werden. Die Schaltelemente werden größtenteils manuell, d.h. von Hand, einige wenige mittels Fußschalter, betätigt.

Instrumentenfunktionen können sein:
- Drehzahlregelung eines Instrumentenantriebsmotors (Elektro-Luft-Motor, Turbine)
- Bestimmung der Drehrichtung des Antriebsmotors (Rechts-/Linkslauf)
- Bestimmung und Zuschalten der Kühlmedien (Luft, Wasser, Spray)
- Vorwahl der Leistung des Instrumentenantriebes
- Vorwahl der Steuerungsart des Instrumentenantriebes (Ein-/Aus-Funktion oder Regelfunktion)

Das Ansteuern der Instrumentenfunktionen erfolgt beim Stand der Technik in der Regel durch an geeigneter Stelle angeordnete Schalt- oder Steuerelemente, über die die Antriebe direkt oder indirekt über Ventile, Relais, od.dgl. geschaltet werden.

Hilfsfunktionen können sein:
- Die Betätigung einer Mundglasfülleinrichtung bei einem Helferingerät
- Die Betätigung einer Speischalenrundspülung bei einem Helferingerät
- Die Betätigung einer Rufanlage
- Die Betätigung eines Türöffners od.dgl.

Das Ansteuern dieser Hilfsfunktionen erfolgt beim Stand der Technik über separate, manuell betätigbare Schalter oder Taster, die an örtlich verschiedenen Stellen der Einrichtung angeordnet sind.

Zur Vereinfachung werden im nachfolgenden Text die Mittel, welche die unterschiedlichen Funktionen bewirken, also die Stellmotore, Ventile, Relais, Schaltelemente, Leistungsregelteile, etc., allgemein mit dem Begriff "Stellorgan" bezeichnet.

Bisher konnte man die Vielzahl dieser Funktionen, wenn überhaupt, so nur über eine Vielzahl von dezentral an verschiedenen Stellen der zahnärztlichen Einrichtung angeordneten Betätigungselementen ansteuern. Mit Ausnahme weniger Funktionen, die mittels Fußschalter bisher schon anzusteuern waren, erfolgte die Ansteuerung der sonstigen Funktionen in der Regel von Hand.

Die ständig zunehmende Anzahl von einstellbaren Funktionen wirft nicht nur von der Handhabung her gesehen, sondern auch unter dem Aspekt der Hygiene bei einer Handbetätigung zunehmend Probleme auf.

In jüngster Zeit sind zahnärztliche Einrichtungen bekannt geworden, bei denen viele Schaltfunktionen auf einem oder auch auf mehreren Fußschaltern mit entsprechend vielen Betätigungsgliedern, die in verschiedenen Richtungen betätigbar sind, konzentriert angeordnet sind. Eine solche Überhäufung eines Fußschalters mit Betätigungsgliedern führt dazu, daß der Fußschalter unübersichtlich und nur schwer zu bedienen ist.

Eine Einrichtung mit den Merkmalen a bis f des Anspruchs 1 zeigt die WO-A-8 905 613.

Der im Anspruch 1 angegebenen Erfindung liegt die Aufgabe zugrunde, demgegenüber eine Verbesserung zu schaffen und eine zahnärztliche Einrichtung anzugeben, bei der es dem Benutzer ermöglicht ist, unter Beachtung der heute geforderten Hygienemaßnahmen, eine Vielzahl der eingangs aufgezeigten, unterschiedlichen Funktionen auf relativ einfache, übersichtliche Weise abrufen zu können.

Ein wesentlicher Vorzug der erfindungsgemäßen Einrichtung ist, daß mit nur einer Betätigungsvorrichtung, die vorzugsweise als Fußschalter ausgebildet ist, sämtliche Funktionen ansteuerbar sind. Die Betätigungsvorrichtung braucht an sich nur ein einziges Betätigungsglied zu enthalten, welches vorzugsweise nur in zwei Freiheitsgraden von einer Ruhestellung aus in vorzugsweise zwei paarweise komplementäre Arbeitsstellungen bringbar ist. Die erwähnten Freiheitsgrade können rotatorische oder translatorische Freiheitsgrade sein. Die Bewegungen in den translatorischen Freiheitsgraden können in Richtung der Längsausdehnung des Fußschalters und auch quer dazu verlaufen, während die Bewegungen in den rotatorischen Freiheitsgraden um eine Hochachse und gegebenenfalls auch um eine Querachse verlaufen können. Mit diesen wenigen Verstellmöglichkeiten lassen sich beliebig viele Funktionen ansteuern. Die Bedienperson hat nur ein einziges Bedienelement, wodurch eine einfache, ergonomische Betätigung ermöglicht ist. Der Blickkontakt richtet sich somit nicht mehr, wie bisher, auf eine Vielzahl von an unterschiedlichen Stellen der Einrichtung angeordneten Betätigungsgliedern, sondern konzentriert sich ausschließlich auf das Sichtfeld, welches an geeigneter Stelle der Einrichtung, z.B. auf dem Arztgerät oder auf einem Schrank im Hinterkopfbereich des Stuhles, angeordnet sein kann.

Durch das Zusammenfassen aller wichtigen Funktionen auf ein Sichtfeld und durch das Bedienen dieser Funktionen über nur ein einziges Betätigungsglied läßt sich eine spürbare Entlastung bei der Bedienung der Einrichtung erzielen.

Eine erste wesentliche Komponente der erfindungsgemäßen Einrichtung ist die Betätigungsvorrichtung, die vorzugsweise ein Fußschalter ist, der ein einziges Betätigungsglied enthält, vorzugsweise in Form einer Platte oder einer Scheibe, die in mindestens und vorzugsweise in zwei Freiheitsgraden verstellbar ist. Vorzugsweise können diese Bewegungen von einer Mittelstellung ausgehende Kipp- und Schwenkbewegungen sein, die das Betätigungsglied ausführt; denkbar ist auch eine kombinierte Schwenk- und Drehbewegung. Auch eine Bewegung in Ebene des Betätigungsgliedes, eventuell kombiniert mit einer Drehbewegung, ist denkbar und liegt im Rahmen der Erfindung.

Eine zweite wesentliche Komponente ist das Sichtfeld. Auf diesem können der Bedienperson einerseits die möglichen auslösbaren Funktionen visuell dargestellt, andererseits die momentane Ansteuerungsposition angezeigt werden.

Das Sichtfeld kann sämtliche anwählbare Funktionen aufzeigen; denkbar und im Rahmen der Erfindung liegt es aber auch, nur Teile, im nachfolgenden mit "Informationsgraphikblöcke" bezeichnet, auf dem Bedienfeld darzustellen. Letztere Version ist besonders in Verbindung mit einer Bildschirmdarstellung von Vorteil. Die Informationsgraphikblöcke können auf verschiedene Weise visuell dargestellt werden. Gemäß einer vorteilhaften Ausgestaltung der Erfindung kann das Sichtfeld durch horizontale und vertikale Linien aufgebaut sein, die zweckmäßigerweise von einem Bezugspunkt oder einer Bezugslinie symmetrisch zu dieser angeordnet sind. Diese Linien entsprechen zweckmäßigerweise der Bewegung des Betätigungsgliedes, d.h. die vertikalen Linien entsprechen einer Kippbewegung in Längsrichtung und die horizontalen Linien einer seitlichen Kipp- oder Auslenkbewegung des Betätigungsgliedes. Bezüglich der Ausgestaltung des Sichtfeldes ist eine Vielzahl von Modifikationen denkbar, von denen nachfolgend einige näher erläutert werden.

Eine dritte wesentliche Komponente der erfindungsgemäßen Einrichtung ist die Steuerelektronik, mit der unter Verwendung eines Mikrocontrollers (Mikroprozessor) die Signale, die von den Fußschaltersignalgebern kommen, aufbereitet und auf dem Sichtfeld angezeigt werden, und über den dann auch die Schalt- und Steuervorgänge zu den einzelnen Gerätschaften ausgelöst werden. Das Auslösen selbst kann auf verschiedene Weise an der Betätigungsvorrichtung erfolgen; entweder, indem eine der Freiheitsgrade dafür benutzt wird, oder indem das Betätigungsglied in einer der Arbeitsstellungen einen besonderen Druckpunkt aufweist, bei dessen Überwindung das "Auslösesignal" gegeben wird.

Nachfolgend werden mehrere vorteilhafte Ausführungsbeispiele der Erfindung anhand der Zeichnung näher beschrieben.

Es zeigen:
Figur 1 eine zahnärztliche Einrichtung in vereinfachter perspektivischer Darstellung,
Figur 2 den in Figur 1 dargestellten Fußschalter im Längsschnitt,
Figur 3 den Fußschalter im Schnitt entlang der Linie III/III in Figur 2,
Figur 4 eine erste Ausführungsform einer Darstellung von Informationen auf einem Sichtfeld nach der Erfindung,
Figuren 5 bis 7 weitere Ausführungsformen einer Sichtfeld-Informations-Darstellung,
Figur 8 eine Ausführungsform eines Blockschaltbildes für die Steuerelektronik,
Figur 9 eine Variante zu der in Figur 8 dargestellten Ausführungsform,
Figur 10 eine vereinfachte Darstellung einer Schaltung zur Erzielung einer elektronischen Sprungfunktion.

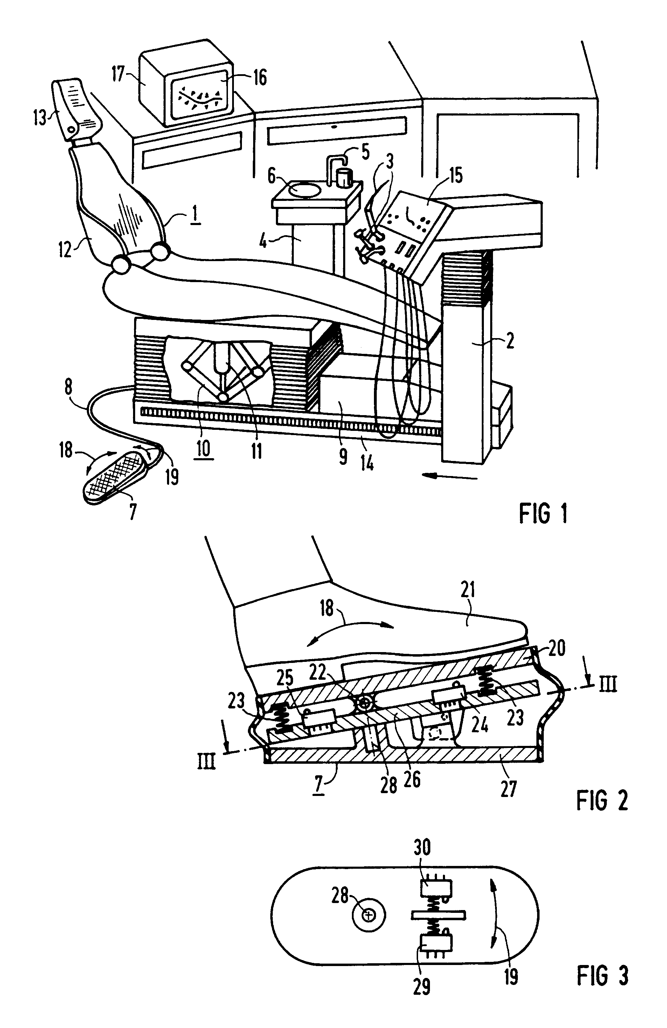

Die Figur 1 zeigt in einer vereinfachten schaubildlichen Darstellung eine zahnärztliche Einrichtung, enthaltend einen zahnärztlichen Patientenstuhl 1, ein an diesem in Pfeilrichtung verfahrbar gehaltertes Arztgerät 2, welches in bekannter Weise eine Vielzahl von Instrumenten 3 aufweist, ein auf der gegenüberliegenden Seite des Patientenstuhles 1 fest oder ebenfalls verfahrbar angeordnetes Helferingerät 4, welches eine Mundglasfülleinrichtung 5 sowie eine Speischalenspülung 6 aufweist und einen mit 7 bezeichneten Fußschalter, der über ein Kabel 8 mit einer noch später näher erläuterten, im Inneren des Arztgerätes 2 oder des mit 9 bezeichneten Anschlußkastens angeordneten Steuerelektronik verbunden ist.

Der Patientenstuhl 1 kann mittels einer mit 10 bezeichneten und in der Zeichnung sehr vereinfacht dargestellten Hubeinrichtung höhenverstellt werden. Hierzu ist in bekannter Weise zwischen nicht näher erläuterten Gelenkarmen ein elektrischer Stellmotor 11 vorgesehen. Analog dieser Hubeinrichtung können weitere, nicht dargestellte Stellmotoren zur Verstellung der Rückenlehne 12 sowie der Kopfauflage 13 und gegebenenfalls weiterer Stuhlteile vorgesehen sein. Zur Verstellung des Arztgerätes 2 ist am Stuhlsockel 14 eine nicht dargestellte, ebenfalls einen Stellmotor aufweisende Verstelleinrichtung vorgesehen, mit der das Arztgerät aus der dargestellten Nichtgebrauchsstellung in Pfeilrichtung in eine bestimmte Arbeitsposition gefahren werden kann.

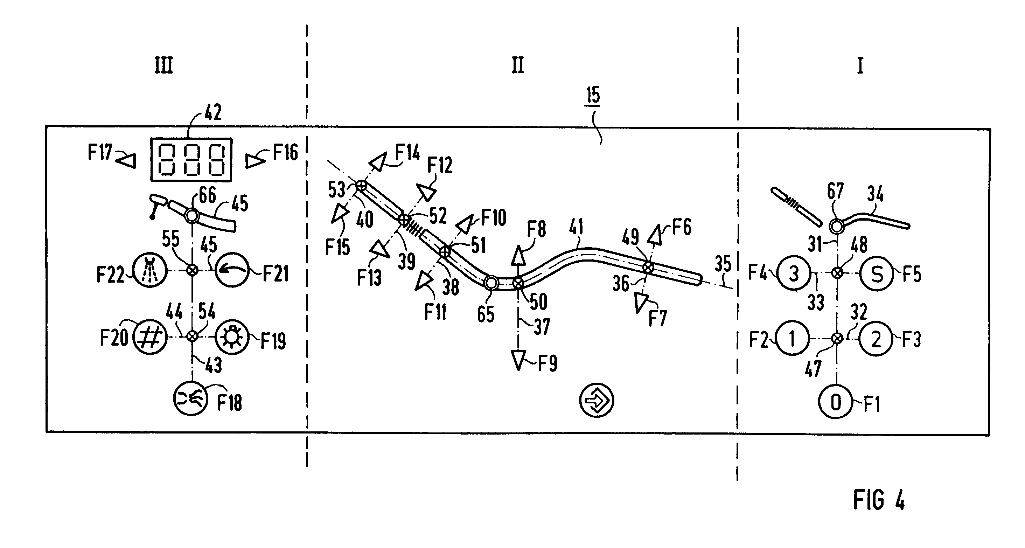

An der Frontseite des Bedienfeldes des Arztgerätes 2 ist ein Sichtfeld 15 angeordnet, welches anhand der Figur 4 noch näher erläutert wird.

Im Blickbereich der Bedienperson ist noch ein zweites Sichtfeld 16 in Form eines Bildschirmes eines Monitors 17 vorgesehen, auf dem alternativ oder zusätzlich zum Sichtfeld 15 auf elektronischem Wege bestimmte anwählbare Funktionen auf dem Monitor dargestellt werden können. Der Monitor 17 kann, wie im Ausführungsbeispiel, im Hinterkopfbereich des Stuhles auf einem Schrank oder an anderer Seite im Blickfeld der Bedienperson aufgestellt sein.

Der Fußschalter 7 kann, wie durch die Pfeile 18 und 19 angedeutet, in zwei komplementäre Arbeitsstellungen gekippt werden. Näheres ist aus den Schnittdarstellungen in den Figuren 2 und 3 ersichtlich. Der Fußschalter enthält ein plattenförmiges Betätigungsglied 20, welches so dimensioniert ist, daß der mit 21 bezeichnete Fuß einer Bedienperson vollflächig aufgelegt werden kann. Etwa im Bereich des Übergangs von der Schuhsohle zum Absatz ist eine erste, quer zur Längsrichtung des Betätigungsgliedes 20 verlaufende Horizontalachse 22 vorgesehen, um die das Betätigungsglied 20 entgegen von Federelementen 23 in Richtung des Pfeiles 18 bewegt werden kann. Der Fußschalter kann so von einer Ausgangs- oder Ruheposition in zwei Arbeitspositionen gebracht werden, die im folgenden als 'erste komplementäre Arbeitsstellung' bezeichnet wird. Im Verstellbereich des Betätigungsgliedes 20 sind ferner Mikroschalter 24, 25 vorgesehen, welche bei einer Kippbewegung nach vorne oder rückwärts ansprechen.

Die Achslagerung 22 ist auf einer Zwischenplatte 26 befestigt, die gegenüber einer Basisplatte 27 des Fußschalters um eine nahezu senkrechte Achslagerung 28 in Richtung des Pfeiles 19 (Figur 3) schwenkbar ist. Im Schwenkbereich dieser Zwischenplatte 26 sind zwei weitere Mikroschalter 29, 30 angebracht. Mit den vier Mikroschaltern 24, 25 und 29, 30 können sämtliche, für die Bedienung der zahnärztlichen Einrichtung erforderlichen Funktionen angesteuert bzw. ausgelöst werden.

Wie bereits erwähnt, kann der Fußschalter alternativ zu der gezeigten Ausführungsform auch so gestaltet sein, daß anstelle der seitlichen Schwenkbewegung (Pfeil 19) eine seitliche Kippbewegung ausgeführt wird. Ebenso ist es möglich, das Betätigungsglied in Plattenebene zu verstellen, d.h. einerseits vor- und rückwärts und andererseits seitlich nach links und rechts.

Anhand der Figur 4 wird eine von mehreren möglichen, im Rahmen der Erfindung liegenden Ausführungsformen eines Sichtfeldes beschrieben, wie es gemäß Figur 1 an der Frontseite des Bedienfeldes des Arztgerätes 2 angeordnet ist.

Das Sichtfeld 15 weist drei Informationsgraphikblöcke I, II, III auf. Diese werden im folgenden kurz Info-Blöcke genannt. Der Info-Block I dient zur Anzeige und zum Abruf von fünf wählbaren Stuhlprogrammen und enthält dementsprechend fünf mit den Kennungen 0, 1, 2, 3 und S versehene Funktionsanzeigeelemente F1 bis F5. Die Funktionsanzeigeelemente F1 bis F5 sind entlang einer Bezugslinie 31, im folgenden mit "Ast" bezeichnet, und von dieser abgehenden Querlinien 32, 33, im folgenden mit "Verzweigungen" bezeichnet, angeordnet. Das Funktionsanzeigeelement F1 repräsentiert die Aussteige- oder Nullposition des Stuhles, die Anzeigeelemente F2 bis F4 drei frei wählbare Stuhl- bzw. Arbeitspositionen und das Anzeigeelement F5 eine Sonderstellung des Stuhles, z.B. eine Speistellung für den Patienten. Oberhalb der Anordnung der Funktionselemente F1 bis F5 ist ein mit 34 bezeichnetes Symbol eines Stuhloberteiles angeordnet, welches den Benutzer auf den Info-Block "Stuhlpositionen" aufmerksam machen soll.

Der mittlere Info-Block II dient zur Anzeige und Bedienung von dem Patientenstuhl zugeordneten Funktionen. Auch hier sind entlang einer als "Ast" zu bezeichnenden Linie 35 und von dieser abgehenden Verzweigungen 36 bis 40, an deren Enden jeweils Funktionsanzeigeelemente F6 bis F15 angeordnet sind. Mit diesen Funktionsanzeigeelementen können diverse Stuhlfunktionen, wie Stuhloberteilverstellung, Sitzhöhenverstellung, Rückenlehnenneigungsverstellung, Kopfstützenneigungseinstellung und Kopfstützenlängsverschiebung optisch angezeigt und abgerufen werden. Eine Symboldarstellung 41 in Form einer Darstellung des Oberteils eines Patientenstuhles unterstreicht die Zuordnung der Funktionsanzeigeelemente zu den betreffenden Stuhlteilen, die verstellt werden und erleichtert dem Benutzer auch die Anwahl der Elemente, wenn eine Verstellung der Stuhlteile eingeleitet werden soll.

Der linke Info-Block III ist für die Darstellung der Instrumentenfunktionen vorgesehen. Im oberen Abschnitt dieses Info-Blocks werden an einem Anzeigefeld 42 Drehzahl- oder Leistungs(Intensitäts-)werte für die Instrumentenantriebe (Elektromotor, Luftmotor, Turbine, Elektrochirurgie, etc.) vorgewählt und angezeigt. Das Vorwählen geschieht mittels seitlich angeordneter Funktionstasten F16, F17, die gleichsam auch Funktionsanzeigeelemente beinhalten. Mit den Funktionsanzeigeelementen F18 bis F22, die ebenfalls entlang eines Astes 43 und von diesem abzweigenden Verzweigungen 44, 45 angeordnet sind, werden Funktionen, wie "chip blower", Instrument mit/ohne Licht, Spray ein/aus, Drehrichtung links/ rechts, optisch angezeigt. Eine Symboldarstellung 45 eines Instruments zeigt dem Benutzer an, daß es sich hier um den Info-Block für Instrumente handelt.

Die Funktionsanzeigeelemente enthalten außer einer optischen Kennung, z.B. in Form eines Aufdruckes oder einer Markierung, optische Signalgeber in Form von Lämpchen, LED's, LCD's oder LCID's (Pos. 47 bis 55).

Wie später noch näher erläutert, sind zweckmäßigerweise entlang der Äste und Verzweigungen, vorzugsweise an den Kreuzungspunkten, weitere optische Signalgeber vorhanden, die dem Benutzer in Verbindung mit der Fußschaltersteuerung anzeigen, an welcher Stelle er sich gerade bezüglich einer Eingabe oder Abfrage einer Information befindet. Diese weiteren optischen Signalgeber sind der Einfachheit halber in Figur 4 durch Lampensymbole gekennzeichnet. Bei der Darstellung des Infoblockes II ist es denkbar, das hier schematisiert abgebildete Stuhloberteil im Bereich der Kreuzungspunkte abschnittsweise mit Lichtbändern zu versehen. Dem Benutzer kann so optisch sehr gut aufgezeigt werden, an welchem Kreuzungspunkt er sich gerade mit der Ansteuerung befindet.

Es sei an dieser Stelle darauf hingewiesen, daß die Linien, die die Äste und Verzweigungen darstellen, nicht unbedingt auf dem Sichtfeld eingezeichnet sein müssen; die Linien können also auch imaginär vorhanden sein. Wesentlich ist, daß die Funktionsanzeigeelemente in einer bestimmten Zuordnung optisch in Erscheinung treten.

Denkbar und im Rahmen der Erfindung liegt es auch, daß bei Erreichen eines Kreuzungspunktes die jeweils benachbarten Funktionsanzeigeelemente aufleuchten oder blinken, und zwar so lange, bis die gewünschte Funktion über den Fußschalter angewählt ist.

Gemäß einer weiteren vorteilhaften Ausgestaltung der Erfindung sind die Funktionsanzeigeelemente mit Mikroschaltern kombiniert, wodurch es möglich ist, zusätzlich zu der optischen Anzeige durch Andrücken auf die Fläche des Funktionsanzeigeelements einen Steuer- oder Schaltvorgang auch von Hand auszulösen. Vorteilhaft ist es, hierzu das gesamte Sichtfeld als Folientastatur auszubilden, wobei im Bereich der Funktionsanzeigeelemente entsprechende Folienschalter vorgesehen sind.

Bevor die dritte Komponente, die Steuerelektronik, näher beschrieben wird, soll auf einige, im Rahmen der Erfindung liegende Varianten bezüglich des zuvor erläuterten Sichtfeldes hingewiesen werden.

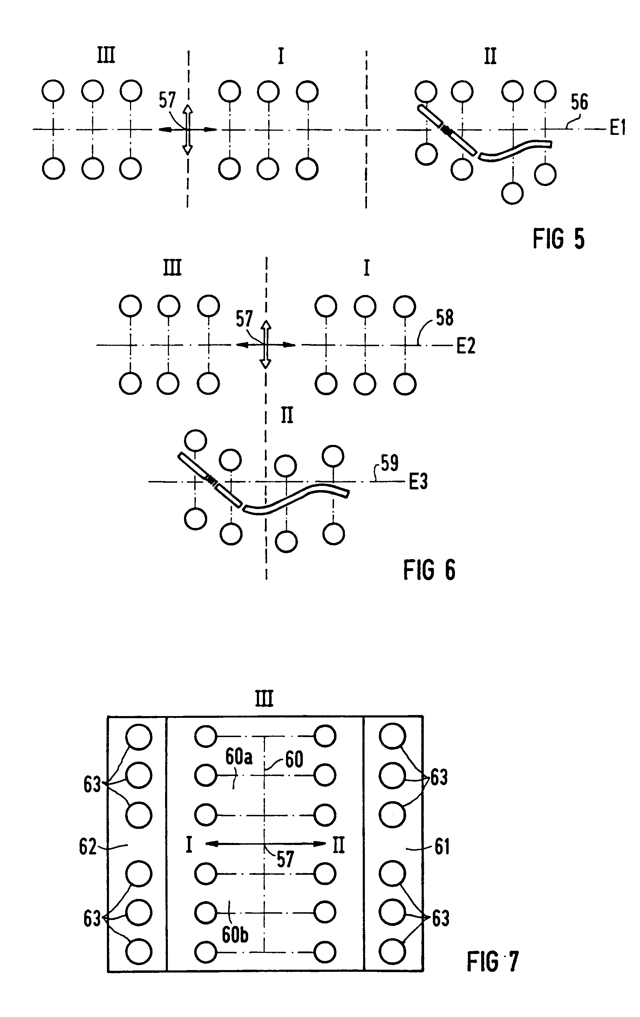

Wie aus dem beschriebenen Ausführungsbeispiel hervorgeht, kann die Liniendarstellung für den Verlauf der Äste und Abzweigungen in einem Infoblock horizontal, vertikal oder auch schräg verlaufen. Die Infoblöcke können auch in anderer Reihenfolge nebeneinander angeordnet sein, wie dies aus der schematischen Darstellung in Figur 5 hervorgeht. Des weiteren kann ein gemeinsamer, in einer Ebene (E1) liegender Ast (Pos. 56 in Fig. 5) für sämtliche Blöcke vorgesehen sein, von dem aus nach oben oder unten die Verzweigungen abgehen, an deren Enden sich die Funktionsanzeigeelemente befinden. Ausgangspunkt für eine Ansteuerung der Funktionen ist ein mit 57 bezeichneter Bezugspunkt, der der neutralen Mittelstellung des Fußschalters entspricht. Von diesem Bezugspunkt aus können entlang des Astes 56 die Funktionsanzeigeelemente der Infoblöcke angesteuert werden. Im Ausführungsbeispiel nach Figur 4 kann dieser Bezugspunkt an den durch Doppelkreise gekennzeichneten Stellen der Symboldarstellungen 34, 31 und 45 liegen.

Anstelle einer Anordnung der Infoblöcke in einer Ebene können diese auch übereinander in mehreren Ebenen angeordnet sein, wie dies in Figur 6 dargestellt ist. Bei dieser Variante sind die Infoblöcke I und III in einer Ebene (E2) und darunter der Infoblock II in einer anderen Ebene (E3) angeordnet. Die Äste 58, 59 verlaufen hier für alle drei Infoblöcke waagerecht; denkbar ist es aber auch, den Ast 59 für den Infoblock II entsprechend der Symboldarstellung des Stuhloberteils verlaufen zu lassen, wie dies in Fig. 4 gezeigt ist.

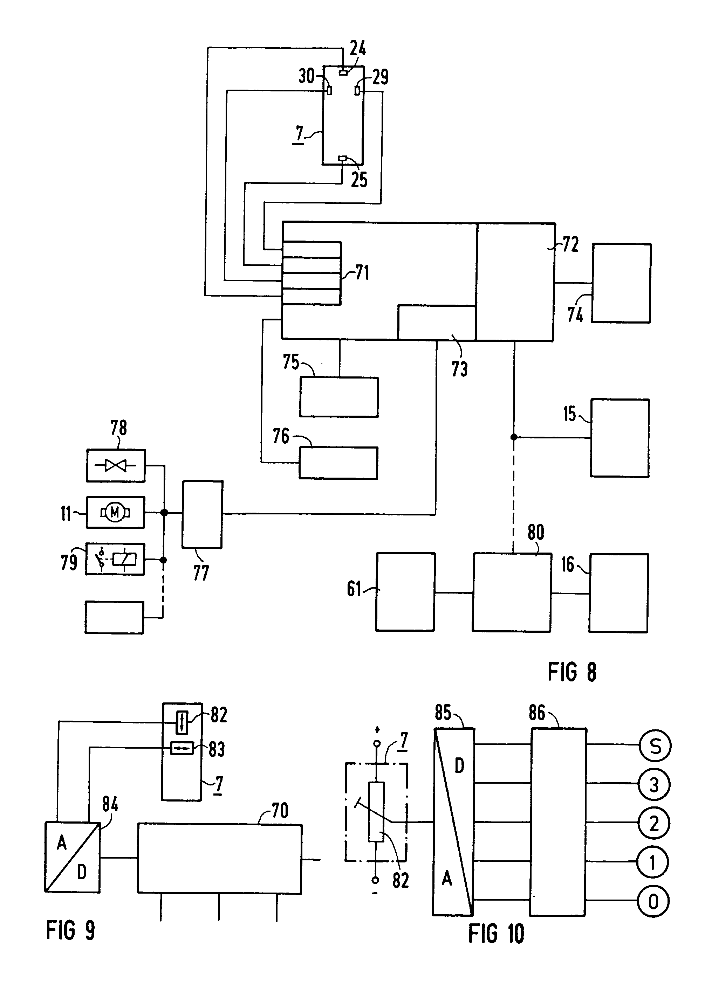

Wenngleich es zwar vorteilhaft sein kann, mehrere Infoblöcke nebeneinander anzuordnen, so ist dies nicht zwingend notwendig. Denkbar und im Rahmen der Erfindung liegt es auch, nur einen Infoblock auf dem Sichtfeld darzustellen und diesen in mehrere Untergruppen zu unterteilen. Die Figur 7 zeigt eine solche Anordnung mit einem vertikalen Ast 60, der von dem Bezugspunkt 57 aus einen oberen Abschnitt 60a und einen unteren Abschnitt 60b mit jeweils diversen Funktionsanzeigeelementen enthält. Vom Bezugspunkt 57 aus können die anderen Infoblöcke (I und II) durch Auslenken des Fußschalterbetätigungselements aus der Mittelstellung angewählt werden. Diese Art der Darstellung ist besonders vorteilhaft in Verbindung mit einer digitalen Bilddarstellung über einen Monitor, weil dort auf elektronischem Wege das Sichtfeld erzeugt wird und so die Bedienperson zunächst den gewünschten Infoblock durch Abruf entsprechend festgelegter Daten aus einem Datenspeicher auf dem Bildschirm darstellen lassen kann. Bei dieser digitalen Darstellung werden die Infoblöcke mit Hilfe entsprechender Software sichtbar gemacht. Die Lichtpunkte entlang eines Astes können bei dieser Ausführung durch den Bildschirmcursor bestimmt werden, der bei Betätigung des Fußschalters in Richtung der jeweils anzuwählenden Funktion bewegt wird. Diese Art der Sichtfelddarstellung hat gegenüber der vorbeschriebenen den Vorteil, daß nur der gewählte Infoblock, den die Bedienperson benötigt, sichtbar gemacht zu werden braucht. Die Bedienperson braucht sich somit nur auf einen einzigen Infoblock zu konzentrieren. Ein weiterer Vorteil ist darin zu sehen, daß an sich beliebig viele Funktionen auf einfache Weise anzeigbar und auch ansteuerbar sind. Nachdem, wie in Figur 6 angedeutet, eine Aufteilung der Funktionsanzeigeelemente in mehrere Ebenen und auch innerhalb einer Ebene in mehreren Abschnitten leicht möglich ist, ist die Anzahl der vorzusehenden Funktionen theoretisch unbegrenzt. Ein weiterer Vorteil ist darin zu sehen, daß beliebige Funktionen auch zu einem späteren Zeitpunkt durch entsprechend geänderte oder ergänzte Software leicht nachrüstbar sind. Durch die Aufteilung in verschiedene Abschnitte kann man sinnvolle Funktionen zusammenfassen, z.B. die Funktionen für Stuhlprogramme oder Instrumtenfunktionen, wodurch die Auflösung, d.h. die Anforderungen an die Geschicklichkeit des Fußes, durch die entsprechend geringere Anzahl von Ebenen pro Abschnitt dann nicht mehr so groß ist.

Besonders vorteilhaft ist es bei Darstellung des Sichtfeldes über einen Bildschirm, auf diesen eine Folientastatur oder ein 'touch-screen' anzuordnen, mit deren Hilfe es möglich ist, auch eine Steuerung der einzelnen Funktionen per Hand durchzuführen. Das Sichtfeld kann auch mit sog. "soft keys" versehen sein, die z.B. seitlich, wie in Figur 7 gezeigt, angeordnet sind; diese können für die manuelle Betätigung der am Bildschirm angezeigten Funktionen dienen (Pos. 61 bis 63). Die Betätigung kann hier über Folientaster 63 erfolgen.

Die Verknüpfung der einzelnen Info-Blöcke kann auf elektrischem Wege mit der Entnahme der Instrumente aus ihren Ablagen gekoppelt sein, und zwar derart, daß bei abgelegten Instrumenten beispielsweise nur der Info-Block I oder II auf dem Bildschirm erscheint, dagegen bei einem gezogenen Instrument nur der instrumentenbezogene Info-Block III. Der Lichtpunkt oder damit der Startpunkt zum Anwählen der einzelnen Funktionsanzeigeelemente würde sodann automatisch auf den Start- oder Bezugspunkt des gewählten und angezeigten Info-Graphikblockes überspringen. Beim Zurücklegen der Instrumente springt der Lichtpunkt automatisch wieder zurück auf den Start- oder Bezugspunkt des Info-Blockes II oder I.

Anhand der Blockschaltbilder gemäß Figuren 8, 9 und 10 wird die Steuerelektronik näher beschrieben.

Das "Herz" der Steuerelektronik ist ein Mikrocontroler 70, der mehrere Zähler 71, ein Ein-/Ausgabeteil 72 sowie eine serielle Schnittstelle 73 enthält. An dem Ein-/Ausgabeteil 72 ist einerseits eine Folientastatur oder 'touch-screen'-Tastatur 74 angeschlossen, welche, wie bereits erwähnt, an den Stellen, an denen auf dem Sichtfeld 15 die Funktionsanzeigeelemente vorhanden sind, entsprechende Schalter enthält, mit denen die gewünschten Funktionen, die von Hand angesteuert werden, ausgelöst werden können. Am Ausgabeteil 72 ist das Sichtfeld in Form von z.B. eines LED-Displays angeschlossen.

Für die Signalgeber (Mikroschalter 24, 25; 29, 30) sind an sich im Ausführungsbeispiel vier Zähler 71 vorgesehen. Denkbar ist es auch, jeweils zwei Zähler zu einem zusammenzufassen, wobei dann jeder Zähler in beide Richtungen läuft.

Mit dem Mikrocontroler 70 sind ein Datenspeicher 75 und ein Festspeicher 76 verbunden. An die serielle Schnittstelle 73 sind über einen Seriell-Parallel-Wandler 77 mit gegebenenfalls entsprechenden Leistungsstufen die einzelnen Stellorgane angeschlossen. Diese können sein ein Ventil 78 zur Steuerung des Durchflusses von z.B. Treibluft für einen Antriebsmotor eines zahnärztlichen Handstückes, der in Figur 1 bereits erläuterte Stellmotor 11, mit dem die Hubeinrichtung zur Höhenverstellung des Stuhles betätigt werden kann oder ein Relais 79 zur Aktivierung eines Elektroantriebsmotors.

Bei Verwendung eines Bildschirmes als Sichtfeld ist es vorteilhaft, an das Ausgabeteil 72 des Mikrocontrolers 70 einen Videocontroler 80 und einen Bildspeicher 81 anzuschließen.

Anhand der Figur 9 wird eine Ausführungsform vorgestellt, bei der anstelle der vier Mikroschalter im Fußschalter optische, magnetische oder elektrische, wegeabhängige Stellungsgeber vorgesehen sind, die entsprechend einer Verstellung des Betätigungsgliedes 20 aus seiner Grundstellung eine stellungsabhängige Größe liefern. Bei dieser Variante sind praktisch nur zwei Stellungsgeber (82, 83) notwendig. Im Falle von analogen Stellungsgebern, z.B. Potentiometern, die aus einer Mittelstellung heraus verstellt werden können, wäre zusätzlich noch ein A/D-Wandler 84 vorzusehen, der die analogen Signale in digitale Signale umwandelt. Die Weiterverarbeitung der Daten bzw. das Einlesen erfolgt analog dem Blockschaltbild gemäß Figur 8. Auch hier kann das Aktivieren mittels eines zusätzlichen Mikroschalters oder über einen sogenannten Pedaldruckschalter erfolgen.

Der Vorteil der in Figur 9 aufgezeigten Lösung besteht darin, daß die Bewegung eines Lichtpunktes entlang eines Astes nicht schrittweise mit vorgegebener Geschwindigkeit erfolgt, sondern durch die Geschwindigkeit der Betätigung des Betätigungsgliedes 20 am Fußschalter bestimmt wird. Dadurch ist eine schnellere Bedienung und Ansteuerung möglich. Außerdem können Funktionen stufenlos und bewegungsproportional eingestellt werden. Die Bewegung der Drehzahl eines Stellmotors oder die Leistung eines Zahnsteinentfernungsgerätes oder die eines HF-Chirurgiegerätes kann so sehr rasch auf den gewünschten Wert hochgefahren werden.

Das Anfahren der gewünschten Informationselemente kann stufenlos oder entsprechend einer elektrischen Sprungfunktion schrittweise entlang eines Astes oder von Ebene zu Ebene erfolgen. Ein Prinzipschaltbild zur Erzielung einer stufenweisen Anzeige ist in Figur 10 aufgezeigt. Danach wird ein analoges Fußschaltersignal von einem Stellungsgeber, z.B. von der Position 82 in Figur 9, einem A/D-Wandler 85 zugeführt, der mit einem Decoder 86 verbunden ist, an dessen Ausgänge die Funktionsanzeigeelemente, z.B. die Funktionsanzeigeelemente F1 bis F5 in Figur 4, angeschlossen sind. Nachfolgend wird die Wirkungsweise der Steuereinrichtung anhand der Sichtfelddarstellung in Figur 4 näher erläutert.

Der Mikrocontroler 70 stellt nach dem Einschalten der Stromversorgung zunächst einen Ruhezustand her. Die hierzu vorgesehenen Daten werden aus dem Datenspeicher 75 entnommen. Die Zähler 71 befinden sich auf einem Mittelwert oder auf Null. Wird nun das Betätigungsglied 20 des Fußschalters 7 aus der Grund- oder Ruhestellung in die eine Arbeitsrichtung bewegt und dabei der eine Mikroschalter (24 oder 25; 29 oder 30) betätigt, so beginnt der bzw. die Zähler 71, in die der Betätigungsrichtung entsprechende Richtung zu laufen. Die Frequenz, mit der der Zähler läuft, kann vorgegeben sein oder auch vom Kunden eingestellt werden. Der Mikrocontroler 70 bewegt über das Ausgabeteil 72 von einem definierten Startpunkt aus einen Lichtpunkt auf dem Sichtfeld 15 bzw. simuliert die Bewegung des Lichtpunktes durch die Ansteuerung entsprechend der LED's. Der Startpunkt kann an sich frei gewählt werden; im Falle des Ausführungsbeispieles gemäß Figur 4 kann er beispielsweise an der mit der Pos. 65 bezeichneten Stelle vorgesehen sein. Bei einem Verlassen des Infoblockes II springt der Lichtpunkt automatisch auf einen der Bezugspunkte 66, 67 der benachbarten Info-Blöcke I bzw. II über.

Im Falle der Verwendung einer Bildschirmdarstellung wird der Bildaufbau und die Bereitstellung der Videosignale über den Videocontroler 80 erzeugt. Der Mikrocontroler 70 gibt dabei die Bilddaten aus dem Datenspeicher 75 nach dem Einschalten an den Videocontroler 80, der diese Daten dann im Bildspeicher 81 ablegt. Durch Änderung der Daten während des Betriebes wird die Bewegung des Lichtpunktes entlang eines Informationsastes realisiert.

Die Bedienperson führt zunächst den Lichtpunkt mit Hilfe des Fußschalters von der definierten Startposition aus entlang eines Astes, bis derjenige Kreuzungspunkt erreicht ist, an dem sich das gewünschte Funktionsanzeigeelement befindet. Dabei werden in der Steuerelektronik die Steuersignale aus den Signalgebern so verarbeitet, daß die optischen Signalgeber der Reihe nach angesteuert werden, während die zugehörigen Stellorgane vorbereitend geschaltet werden. Durch Auslenken des Fußschalters in die andere (zweite) Arbeitsstellung wird an das zugehörige Stellorgan ein Aktivierungssignal gegeben und so die gewünschte Funktion ausgelöst und angezeigt. Die angewählte Stelle kann der Bedienperson durch ein optisches Signal, z.B. durch Blinken, oder auch durch ein akustisches Signal (z.B. mittels Sprachausgabe) quittiert werden. Das Aktivieren einer angewählten Funktion kann nach einer bestimmten Sicherheitszeit nach dem Loslassen des Betätigungsgliedes erfolgen. Das Auslösen eines Aktivierungssignals kann auch über einen zusätzlichen weiteren Mikroschalter erfolgen, der vorzugsweise in einer Mittenstellung des Betätigungsgliedes bei Betätigung anspricht. Nach Loslassen des Betätigungsgliedes geht dieses wieder in seine Ruhestellung zurück, wobei die Anzeige auf den Start- oder Bezugspunkt zurückspringt.

Ist eine gewählte Funktion aktiviert, schreibt der Mikrocontroler 70 die Betriebswerte in den nicht flüchtigen Festspeicher 76. Dadurch ist sichergestellt, daß bei einem eventuellen Netzausfall der Betriebszustand erhalten bleibt. Die Bedienperson kann somit nach einem eventuellen Netzausfall mit den gleichen Funktionen wie zuvor weiterarbeiten. Den Leistungsteilen und damit den Stellorganen wird über die serielle Schnittstelle 73 gleichzeitig mitgeteilt, welche Funktionen und wie diese Funktionen auszuführen sind.

Bei Verwendung einer Folientastatur wird diese über den Eingabeteil 72 ständig abgefragt, so daß bei Betätigung einer der Funktionsanzeigeelemente automatisch über die serielle Schnittstelle 73 das zugehörige Stellorgan angesteuert wird.

Der Lichtpunkt braucht nicht unbedingt entlang eines Astes zwischen den komplementär angeordneten Funktionsanzeigeelementen elektrisch geführt zu werden; denkbar und im Rahmen der Erfindung liegt es auch, den Lichtpunkt mit in die Funktionsanzeigeelemente zu integrieren, indem z.B. jeweils zwei komplementär zueinander angeordnete Funktionsanzeigeelemente gleichzeitig aufleuchten oder blinken und dann paarweise so lange schrittweise weitergeschaltet werden, bis durch Betätigen des Fußschalters in die andere Arbeitsrichtung das gewünschte angewählte Funktionsanzeigeelement erreicht wird. Wenn dieser Zustand dann erreicht ist, leuchtet dann nur noch dieses eine Funktionsanzeigeelement auf.

## Patentansprüche

1. Zahnärztliche Einrichtung, **gekennzeichnet durch** folgende Merkmale:
a) die Einrichtung enthält eine Vielzahl von Gerätschaften (1 bis 6), deren Positionen und/oder Betriebswerte mit Hilfe von elektrischen Stellorganen (Motore, Ventile, Schalter) veränderbar sind,
b) die Einrichtung enthält ferner eine Betätigungsvorrichtung (7) mit einem Betätigungsglied (20), welches aus einer Ausgangsstellung in zumindest zwei Arbeitsstellungen bringbar ist,
c) dem Betätigungsglied (20) sind in den Arbeitsstellungen ansprechende Signalgeber (24, 25; 29, 30; 82, 83) zugeordnet,
d) es ist mindestens ein Sichtfeld (15, 16) vorhanden, welches eine Vielzahl von Symbolkennungen aufweisenden Funktionsanzeigeelementen (F1 bis F22) enthält,
e) die Funktionsanzeigeelemente (F1 bis F22) enthalten optische Signalgeber,
f) die Einrichtung enthält weiterhin eine Steuerelektronik mit einem Mikrocontroller (70), der eingangsseitig mit den Signalgebern (24, 25; 29, 30; 82, 83) des Betätigungsgliedes (20) und ausgangsseitig mit den optischen Signalgebern der Funktionsanzeigeelemente (F1 bis F22) des Sichtfeldes (15, 16) verbunden ist,
g) in der Steuerelektronik werden die Steuersignale aus den Signalgebern (24, 25; 29, 30; 82, 83) so verarbeitet, daß die optischen Signalgeber der Funktionsanzeigelemente (F1 bis F22), in Abhängigkeit von der Betätigung des Betätigungsgliedes (20) in Richtung der gewählten ersten Arbeitsstellung der Reihe nach angesteuert werden, während die zugehörigen Stellorgane vorbereitend geschaltet werden, wobei bei Erreichen des gewünschten Funktionsanzeigelements und anschließender Betätigung des Betätigungsgliedes (20) in die zweite Arbeitsstellung ein Aktivierungssignal an das zugehörige Stellorgan (11) gegeben wird.

2. Einrichtung nach Anspruch 1, **dadurch gekennzeichnet,** daß die Betätigungsvorrichtung als Fußschalter (7) ausgebildet ist und ein plattenförmiges Betätigungsglied (20) enthält, welches so dimensioniert ist, daß der gesamte Fuß einer Bedienperson flächig aufsetzbar ist.

3. Einrichtung nach Anspruch 2, **dadurch gekennzeichnet,** daß das plattenförmige Betätigungsglied (20) in einer Ebene und in dieser Ebene in zwei senkrecht zueinander verlaufenden Richtungen bewegbar angeordnet ist.

4. Einrichtung nach Anspruch 3, **dadurch gekennzeichnet,** daß das Betätigungsglied (20) zusätzlich noch um eine vertikal zu dieser Ebene verlaufenden Achse (28) schwenkbar gelagert ist.

5. Einrichtung nach Anspruch 2, **dadurch gekennzeichnet,** daß das Betätigungsglied (20) einerseits um eine quer zur Längsachse verlaufende Horizontalachse (22) und andererseits um eine senkrecht dazu angeordnete Vertikalachse (28) bewegbar angeordnet ist.

6. Einrichtung nach Anspruch 5, **dadurch gekennzeichnet,** daß Horizontalachse (22) und Vertikalachse (28) auf 1/3 der Länge (L) des plattenförmigen Betätigungsgliedes (20) angeordnet sind.

7. Einrichtung nach einem der Ansprüche 1 bis 6, **dadurch gekennzeichnet,** daß das Betätigungsglied (20) mit wegabhängigen Gebern (82, 83) gekoppelt ist, die in Abhängigkeit von einer Verstellung des Betätigungsgliedes (20) eine Ansteuerung der optischen Signalgeber der Funktionsanzeigeelemente (F1 bis F22) eines Informationsgraphikblockes (I, II, III) bewirken.

8. Einrichtung nach einem der Ansprüche 1 bis 7, **dadurch gekennzeichnet,** daß das Betätigungsglied (20) mit einem zusätzlichen Schaltelement gekoppelt ist, welches im Vergleich zu den Signalgebern (24, 25; 29, 30) einen erhöhten Druckpunkt aufweist, bei dessen Überwindung eine zusätzliche Schaltfunktion ausgelöst wird.

9. Einrichtung nach einem der Ansprüche 1 bis 8, **dadurch gekennzeichnet,** daß die Funktionsanzeigeelemente (F1 bis F22) auf dem Sichtfeld (15, 16) entlang wenigstens eines imaginären oder optisch auf dem Sichtfeld erkennbaren Astes (31, 35, 43, 56, 58, 59, 60) angeordnet sind und mit den optischen Signalgebern auf dem Sichtfeld wenigstens einen Informationsgraphikblock (I, II, III) bilden.

10. Einrichtung nach Anspruch 9, **dadurch gekennzeichnet,** daß die Funktionsanzeigeelemente (F1 bis F22) an von den Ast abgehenden Verzweigungen (32, 33; 36 bis 40; 44, 45) angeordnet sind.

11. Einrichtung nach Anspruch 9, **dadurch gekennzeichnet,** daß die optischen Signalgeber stets von einem der Ausgangsstellung des Betätigungsgliedes zugeordneten Bezugspunkt (57) oder einer Bezugslinie eines gewählten Informationsgraphikblockes (I bis III) aus angesteuert werden.

12. Einrichtung nach einem der Ansprüche 1 bis 11, **dadurch gekennzeichnet,** daß als Sichtfeld ein Monitor (17) vorgesehen ist, auf dessen Bildschirm (16) mindestens ein Informationsgraphikblock (I, II, II) auf elektronischem Wege darstellbar ist.

13. Einrichtung nach Anspruch 12, **dadurch gekennzeichnet,** daß der Bildschirm (16) des Monitors (17) mit einer Touch-screen-Tastatur versehen ist, deren Schaltflächenanordnung der Anordnung der Funktionsanzeigeelemente (F1 bis F22) des darzustellenden Informationsgraphikblockes (I, II, III) entspricht.

14. Einrichtung nach einem der Ansprüche 1 bis 13, **dadurch gekennzeichnet,** daß den Funktionsanzeigeelementen (F1 bis F22) eines Informationsgraphikblockes (I, II, III) eine graphische Symboldarstellung (34, 41, 45) derjenigen Gerätschaften zugeordnet ist, deren Lage und/oder Betriebswerte geändert werden sollen.

15. Einrichtung nach Anspruch 14, **dadurch gekennzeichnet,** daß die graphische Symboldarstellung (41) entlang einer den Ast bildenden Bezugslinie (35) eines Informationsgraphikblockes (I, II, III) angeordnet ist und diesen so in einen oberen und unteren Graphikblockabschnitt unterteilen.

16. Einrichtung nach einem der Ansprüche 1 bis 15, **dadurch gekennzeichnet,** daß mehrere Informationsgraphikblöcke (I, II, III) nebeneinander auf dem Sichtfeld (15) vorgesehen sind.

17. Einrichtung nach Anspruch 16, **dadurch gekennzeichnet,** daß mehrere Informationsgraphikblöcke (I bis III) eine gemeinsame, den Ast bildende Bezugslinie (56) aufweisen.

18. Einrichtung nach Anspruch 16, **dadurch gekennzeichnet,** daß die Informationsgraphikblöcke (I bis III) auf mehrere Ebenen (E2, E3) mit mehreren Ästen (58, 59) aufgeteilt sind.

19. Einrichtung nach einem der Ansprüche 1 bis 18, **dadurch gekennzeichnet,** daß zumindest ein Informationsgraphikblock (I, II, III), ausgehend von einem Bezugspunkt (57), eine den Ast bildende vertikale Linie (31, 43, 60) aufweist, auf der in bestimmten Abständen horizontale Linien (32 bis 34; 44, 45) abzweigen, an deren Enden die optischen Signalgeber der Informationsanzeigeelemente (F1 bis F22) angeordnet sind.

20. Einrichtung nach Anspruch 19, **dadurch gekennzeichnet,** daß im Schnittpunkt eines Astes (31, 35, 43, 40) mit den horizontalen Linien (32 bis 34; 44, 45) weitere optische Signalgeber (47, 48, 49 bis 53) angeordnet sind.

21. Einrichtung nach einem der Ansprüche 1 bis 20, **dadurch gekennzeichnet,** daß der Mikrocontroller (70) einen oder mehrere, den Signalgebern (24, 25; 29, 30) in der Betätigungsvorrichtung (7) zugeordnete Impulszähler (71) enthält, welche mit vorgegebener Frequenz betreibbar sind und bei Erhalt eines Signals entsprechend einer Betätigung des Betätigungsgliedes (20) in Richtung einer der Arbeitsstellungen die optischen Signalgeber (47, 48, 49 bis 55) auf dem Ast (31, 35, 43, 56, 58, 60) eines Informationsgraphikblockes (I, II, III) nacheinander ansteuern.

22. Einrichtung nach einem der Ansprüche 1 bis 21, **dadurch gekennzeichnet,** daß bei Verwendung eines Monitors (17) mit Bildschirm (16) als Sichtfeld der Ausgabeteil (72) des Mikrocontrollers (70) an einen Videocontroller (80) angeschlossen ist, welcher den Bildaufbau der Informationsgraphikblöcke (I, II, III) und die Bereitstellung der Video-Signale an den Bildschirm übernimmt, wobei die Bilddaten nach Einschalten der Elektronik von einem Datenspeicher (75) über den Videocontroller (80) in einem Bildspeicher (81) gegeben werden.

23. Einrichtung nach Anspruch 2, **dadurch gekennzeichnet,** daß der Fußschalter von einer Mittenstellung aus in vier, paarweise komplementäre, Arbeitsstellungen verstellbar ist.

## Claims

1. Actuating arrangement for dental devices having the following features:
a) the device comprises a plurality of pieces of equipment (1 to 6), the positions and/or operating characteristics of which can be changed with the aid of electrical control units (motors, valves, switches),
b) the device also comprises an actuating arrangement (7) with an actuating element (20) which can be moved into at least two working positions from a home position,
c) signal transmitters (24, 25; 29, 30; 82, 83), which are responsive in the working positions, are assigned to the actuating element (20),
d) at least one vision panel (15, 16) is available, which panel contains a plurality of function display elements (F1 to F22) with symbol identification,
e) the function display elements (F1 to F22) contain optical signal transmitters,
f) the device also comprises a control electronics unit with a micro-controller (70) which is connected on the input side to the signal transmitters (24, 25; 29, 30; 82, 83) of the actuating element (20) and, on the output side, is connected to the optical signal transmitters of the function display elements (F1 to F22) of the vision panel (15, 16),
characterised in that
g) in the control electronics unit the control signals from the signal transmitters (24, 25; 29, 30; 82, 83) are processed such that the optical signal transmitters of the function display elements (F1 to F22) are activated in sequence depending on the actuation of the actuating element (20) in
the direction of the first working position selected, whilst the pertinent control units are provisionally switched, in which case, when the desired function display element is reached and the actuating element (20) is subsequently switched into the second working position, an activation signal is sent to the relevant control unit (11).

2. Device in accordance with claim 1, characterised in that the actuating arrangement is designed as a pedal-operated switch (7) and contains a plate-shaped actuating element (20), the dimensions of which are such that the operator can place his/her entire foot down flat on it.

3. Device in accordance with claim 2, characterised in that the plate-shaped actuating element (20) is arranged in one plane and can be moved in this plane in two directions running perpendicular to each other.

4. Device in accordance with claim 3, characterised in that the actuating element (20) is additionally mounted such that it can also swivel about an axis (28) extending vertical to said plane.

5. Device in accordance with claim 2, characterised in that the actuating element (20) is arranged such that it can be moved, on the one hand, about a horizontal axis (22) extending transversely to the longitudinal axis and, on the other hand, about a vertical axis (28) arranged so as to be perpendicular thereto.

6. Device in accordance with claim 5, characterised in that the horizontal axis (22) and vertical axis (28) are placed at 1/3 of the length (L) of the plate-shaped actuating element (20).

7. Device in accordance with one of the claims 1 to 6, characterised in that the actuating element (20) is coupled with path-dependent transmitters (82, 83) which, depending on an adjustment of the actuating element (20), cause the optical signal transmitters of the function display elements (F1 to F22) of an information graphics block (I, II, III) to be activated.

8. Device in accordance with one of the claims 1 to 7, characterised in that the actuating element (20) is coupled with an additional switch element which, in comparison with the signal transmitters (24, 25; 29, 30), has a raised pressure point, triggering an additional switching function when this is exceeded.

9. Device in accordance with one of the claims 1 to 8, characterised in that the function display elements (F1 to F22) on the vision panel (15, 16) are arranged along at least an imaginary branch, or a branch which is visually identifiable on the vision panel, (31, 35, 43, 56, 58, 59, 60) and, together with the optical signal transmitters on the vision panel, form at least one information graphics block (I, II, III).

10. Device in accordance with claim 9, characterised in that the function display elements (F1 to F22) are arranged on junctions (32, 33; 36 to 40; 44, 45) coming off from the branch.

11. Device in accordance with claim 9, characterised in that the optical signal transmitters are always activated from a reference point (57) or a reference line of a selected information graphics block (I to III) associated with the home position of the actuating element.

12. Device in accordance with one of the claims 1 to 11, characterised in that a monitor (17) is provided as a vision panel on whose screen (16) at least one information graphics block (I, II, III) can be represented electronically.

13. Device in accordance with claim 12, characterised in that the screen (16) of the monitor (17) is provided with a touch-screen-keypad whose surface arrangement of switches corresponds with the arrangement of the function display elements (F1 to F22) of the information graphics block to be represented (I, II, III).

14. Device in accordance with one of the claims 1 to 13, characterised in that associated with the function display elements (F1 to F22) of an information graphics block (I, II, III) there is a graphic symbol representation (34, 41, 45) of those pieces of equipment whose position and/or operating characteristics are to be changed.

15. Device in accordance with claim 14, characterised in that the graphic symbol representation (41) is arranged along a reference line (35) of an information graphics block (I, II, III) forming the branch and subdivides said block into a top and a bottom graphics block section.

16. Device in accordance with one of the claims 1 to 15, characterised in that several information graphics blocks (I, II, III) are provided next to each other on the vision panel (15).

17. Device in accordance with claim 16, characterised in that several information graphics blocks (I to III) have a common reference line (56) forming the branch.

18. Device in accordance with claim 16, characterised in that the information graphics blocks (I to III) are divided into several planes (E2, E3) with several branches (58, 59).

19. Device in accordance with one of the claims 1 to 18, characterised in that at least one information graphics block (I, II, III), starting from a reference point (57), has a vertical line (31, 43, 60) forming the branch on which horizontal lines (32 to 34; 44, 45) branch off at certain intervals, at the ends of which lines the optical signal transmitters of the information display elements (F1 to F22) are arranged.

20. Device in accordance with claim 19, characterised in that further optical signal transmitters (47, 48, 49 to 53) are arranged at the point where a branch (31, 35, 43, 40) intersects with the horizontal lines (32 to 34; 44, 45).

21. Device in accordance with one of the claims 1 to 20, characterised in that the micro-controller (70) contains one or several pulse counters (71) assigned to the signal transmitters (24, 25; 29, 30) in the actuating arrangement (7), which counters can be operated at a prescribed frequency and, when a signal is received, activate the optical signal transmitters (47, 48, 49 to 55) on the branch (31, 35, 43, 56, 58, 60) of an information graphics block (I, II, III) in succession in accordance with an actuation of the actuating element (20) in the direction of one of the working positions.

22. Device in accordance with one of the claims 1 to 21, characterised in that when a monitor (17) is used with a screen (16) as a vision panel, the output section (72) of the micro-controller (70) is connected to a video controller (80) which constructs the image of the information graphics blocks (I, II, III) and provides the video signals on the screen, with the image data being transmitted once the electronics have been switched on from a data memory (75) via the video controller (80) to an image memory (81).

23. Device in accordance with claim 2, characterised in that the pedal-operated switch can be adjusted from a central position into four working positions that are complementary in pairs.

## Revendications

1. Dispositif d'actionnement pour des dispositifs de dentisterie, présentant les caractéristiques suivantes :
a) le dispositif comporte une multiplicité d'appareils (1 à 6), dont les positions et/ou les valeurs de fonctionnement peuvent être modifiées à l'aide d'organes électriques de réglage (moteurs, vannes, interrupteurs),
b) le dispositif contient en outre un dispositif d'actionnement (7) comportant un organe d'actionnement (20), qui peut être amené d'une position de départ à au moins deux positions de travail,
c) à l'organe d'actionnement (20) sont associés des générateurs de signaux (24, 25; 29, 30; 82, 83), qui réagissent dans les positions de travail,
d) il est prévu au moins un panneau de visualisation (15, 16), qui comporte une multiplicité d'éléments d'affichage de fonctionnement (F1 à F22), ayant des identifications formées de symboles,
e) les éléments d'affichage de fonctionnement (F1 à F22) comportent des générateurs de signaux optiques,
f) le dispositif comporte en outre un système électronique de commande comportant un microcontrôleur (70), qui est relié côté entrée aux générateurs de signaux (24, 25; 29, 30; 82, 83) de l'organe d'actionnement (20) et, côté sortie, au générateur de signaux optiques des éléments d'affichage de fonctionnement (F1 à F22) du panneau de visualisation (15, 16),
caractérisé par le fait que
g) dans le système électronique de commande, les signaux de commande délivrés par les générateurs de signaux (24, 25; 29, 30; 82, 83) sont traités de telle sorte que les générateurs de signaux optiques des éléments d'affichage de fonctionnement (F1 à F22) sont commandés successivement en fonction de l'actionnement de l'organe d'actionnement (20) dans le sens de la première position de travail choisie, tandis que les organes de réglage associés sont commutés de façon préparatoire, un signal d'activation étant envoyé à l'organe de réglage associé (11) lorsque l'élément désiré d'affichage de fonctionnement est atteint et lorsque l'organe d'actionnement (20) est amené ensuite dans la seconde position de travail.

2. Dispositif suivant la revendication 1, caractérisé par le fait que le dispositif d'actionnement est réalisé sous la forme d'un interrupteur à pied (7) et comporte un organe d'actionnement en forme de plaque (20), qui est dimensionné de telle sorte que tout le pied d'un opérateur peut être appuyé à plat sur cet organe d'actionnement.

3. Dispositif suivant la revendication 2, caractérisé par le fait que l'organe d'actionnement en forme de plaque (20) est disposé dans un plan et, dans ce plan, est déplaçable dans deux directions perpendiculaires entre elles.

4. Dispositif suivant la revendication 3, caractérisé par le fait que l'organe d'actionnement (20) est monté en outre de manière à pouvoir pivoter autour d'un axe (28) perpendiculaire à ce plan.

5. Dispositif suivant la revendication 2, caractérisé par le fait que l'organe d'actionnement (20) est monté de manière à pouvoir être déplacé d'une part autour d'un axe horizontal (22) qui s'étend transversalement à l'axe longitudinal, et d'autre part autour d'un axe vertical (28), qui est perpendiculaire au précédent.

6. Dispositif suivant la revendication 5, caractérisé par le fait que l'axe horizontal (22) et l'axe vertical (28) sont disposés au 1/3 de la longueur (L) de l'organe d'actionnement en forme de plaque (20).

7. Dispositif suivant l'une des revendications 1 à 6, caractérisé par le fait que l'organe d'actionnement (20) est accouplé à des transmetteurs (82, 83), qui dépendent du déplacement et qui, en fonction d'un déplacement de l'organe d'actionnement (20), exécutent une commande des générateurs de signaux optiques des éléments d'affichage fonctionnels (F1 à F22) d'un bloc graphique d'informations (I, II, III).

8. Dispositif suivant l'une des revendications 1 à 7, caractérisé par le fait que l'organe d'actionnement (20) est accouplé à un élément de commutation supplémentaire, qui, par rapport aux générateurs de signaux (24, 25; 29, 30) possède un point de poussée plus grand, lors du franchissement duquel une fonction de commutation supplémentaire est déclenchée.

9. Dispositif suivant l'une des revendications 1 à 8, caractérisé par le fait que les éléments d'affichage de fonctionnement (F1 à F22) situés sur le panneau de visualisation (15, 16) sont disposés le long d'au moins une ligne (31, 35, 43, 56, 58, 59, 60) imaginaire ou identifiable visuellement sur le panneau de visualisation et forment, avec les générateurs de signaux optiques sur le panneau de visualisation, au moins un bloc graphique d'informations (I, II, III).

10. Dispositif suivant la revendication 9, caractérisé par le fait que les éléments d'affichage de fonctionnement (F1 à F22) sont disposés sur des embranchements (32, 33; 36 à 40; 44, 45) qui partent de la ligne.

11. Dispositif suivant la revendication 9, caractérisé par le fait que les générateurs de signaux optiques sont commandés en permanence par un point de référence (57), associé à la position de départ de l'organe d'actionnement, ou par une ligne de référence d'un bloc graphique d' informations sélectionné (I à III).

12. Dispositif suivant l'une des revendications 1 à 11, caractérisé par le fait qu'il est prévu comme panneau de visualisation un moniteur (17), sur l'écran (16) duquel peut être représenté par voie électronique au moins un bloc graphique d'informations (I, II, III).

13. Dispositif suivant la revendication 12, caractérisé par le fait que l'écran (16) du moniteur (17) possède un clavier touch-screen, dont la disposition des surfaces de commutation correspond à la disposition des éléments d'affichage de fonctionnement (F1 à F22) du bloc graphique d'informations (I, II, III) devant être représenté.

14. Dispositif suivant l'une des revendications 1 à 13, caractérisé par le fait qu'aux éléments d'affichage de fonctionnement (F1 à F22) d'un bloc graphique d'informations (I, II, III) est associée une représentation graphique de symboles (34, 41, 45) des appareils, dont les positions et/ou les valeurs de fonctionnement doivent être modifiées.

15. Dispositif suivant la revendication 14, caractérisé par le fait que la représentation graphique de symboles (41) est disposée le long d'une ligne de référence (35), constituant la branche, d'un bloc graphique d'informations (I, II, III) et divise ainsi ce bloc en une section supérieure et une section inférieure.

16. Dispositif suivant l'une des revendications 1 à 15, caractérisé par le fait que plusieurs blocs graphiques d'informations (I, II, III) sont prévus côte-à-côte sur le panneau de visualisation (15).

17. Dispositif suivant la revendication 16, caractérisé par le fait que plusieurs blocs graphiques d'informations (I à III) possèdent une ligne de référence commune (56) constituant la branche.

18. Dispositif suivant la revendication 16, caractérisé par le fait que les blocs graphiques d'informations (I à III) sont subdivisés dans plusieurs plans (E2, E3) comportant plusieurs branches (58, 59).

19. Dispositif suivant l'une des revendications 1 à 8, caractérisé par le fait qu'au moins un bloc graphique d'informations (I, II, III) possède, à partir d'un point de référence (57), une ligne verticale (31, 43, 60) constituant la branche et à partir de laquelle s'étendent, à des intervalles déterminés, des lignes horizontales (32 à 34, 44, 45), aux extrémités desquelles sont disposés les générateurs de signaux optiques des éléments d'affichage d'informations (F1 à F22).

20. Dispositif suivant la revendication 19, caractérisé par le fait que d'autres générateurs de signaux optiques (47, 48, 49 à 53) sont disposés au point d'intersection d'une branche (31, 35, 43, 41) avec les lignes horizontales (32 à 34; 44, 45).

21. Dispositif suivant l'une des revendications 1 à 20, caractérisé par le fait que le microcontrôleur (70) contient un ou plusieurs compteurs d'impulsions (71), qui sont associés au générateur de signaux (24, 25; 30) situés dans le dispositif d'actionnement (7) et que l'on peut faire fonctionner avec une fréquence prédéterminée et qui, lors de la réception d'un signal, conformément à l'actionnement de l'organe d'actionnement (20) en direction de l'une des positions de travail, commandent successivement les générateurs de signaux optiques (47, 48, 49 à 55) situés sur la branche (31, 35, 43, 56, 58, 60) d'un bloc graphique d'informations (I, II, III).

22. Dispositif suivant l'une des revendications 1 à 21, caractérisé par le fait que, lorsque l'on utilise un moniteur (17) comportant un écran (16) en tant que panneau de visualisation, la partie de sortie (72) du microcontrôleur (70) est raccordée à un contrôleur vidéo (80), qui prend en charge la formation de l'image des blocs graphiques d'informations (I, II, III) et la préparation des signaux vidéo sur l'écran, les données d'image étant transmises d'une mémoire de données (75) par l'intermédiaire du contrôleur vidéo (80), à une mémoire d'images (81), après branchement du système électronique.

23. Dispositif suivant la revendication 2, caractérisé par le fait que l'interrupteur à pied peut être déplacé d'une position médiane à quatre positions de travail, qui sont complémentaires par couples.
